# EUROPÄISCHE PATENTSCHRIFT

(11) **EP 2 878 557 B1**
(45) Veröffentlichungstag und Bekanntmachung des Hinweises auf die Patenterteilung: **29.06.2016**
(21) Anmeldenummer: 13005582.5
(22) Anmeldetag: 30.11.2013
(51) Int. Cl.: B65G 17/00

(54) **Horizontalfördereinrichtung**
Horizontal conveyor apparatus
Dispositif de convoyage horizontal

(43) Veröffentlichungstag der Anmeldung: 03.06.2015
(73) Patentinhaber: WEKAL Maschinenbau GmbH, 34560 Fritzlar (DE)
(72) Erfinder: Degenhardt Klaus, 34308 Bad Emstal-Balhorn (DE)
(74) Vertreter: Walther, Walther & Hinz GbR

(56) Entgegenhaltungen:
- EP-A1- 0 759 406
- FR-A1- 2 776 641
- US-A- 4 800 818
- US-B1- 6 191 507
- US-B1- 6 876 896
- US-B2- 6 876 107

## Beschreibung

Die Erfindung betrifft eine Horizontalfördereinrichtung, umfassend eine Horizontalförderbahn mit einer Endlosfördereinrichtung sowie mindestens einer auf der Horizontalförderbahn angeordneten Transporteinrichtung, die durch die Endlosfördereinrichtung mitnehmbar ist, wobei die Endlosfördereinrichtung einen Antrieb aufweist, wobei der Antrieb mit einer Steuerung in Verbindung steht, wobei die Horizontalförderbahn einen Sensor für die Steuerung aufweist, wobei die Transporteinrichtung einen Impulsgeber aufweist, der mit dem Sensor zusammenarbeitet.

Horizontalfördereinrichtungen sind aus dem Stand der Technik hinreichend bekannt. Diese dienen in der Fertigung beispielsweise dem Transport von Werkstückträgern von einem Arbeitsplatz zum nächsten. In der Logistik, beispielsweise in der Lagertechnik, sind Horizontalfördereinrichtungen ebenfalls bekannt, wobei hier Transporteinrichtungen teilweise als Paletten oder als Kisten ausgebildet sind, um Gegenstände vom Regal zu einer Um- oder Auspackstation oder von einer Einpackstation in das Regal zu transportieren.

Eine bekannte Horizontalfördereinrichtung in der Fertigung umfasst eine Horizontalförderbahn, wobei die Horizontalförderbahn im Querschnitt mäanderförmig ausgebildet ist, und demzufolge zwei horizontal und parallel zueinander verlaufende Kufen aufweist, zwischen denen sich eine Führungsspur in Form einer rechteckförmigen Vertiefung befindet, wobei in der Führungsspur die Endlosfördereinrichtung umlaufend und angetrieben angeordnet ist. Die Transporteinrichtungen, insbesondere in Form von Werkstückträgern sind im Wesentlichen komplementär ausgebildet zu dem Querschnitt der Horizontalförderbahn. Das heißt, dass die Transporteinrichtung auf der Endlosfördereinrichtung aufsteht, und durch Reibschluss von dieser mitgenommen wird. Seitlich stützt sich die Transporteinrichtung auf den Kufen der Horizontalförderbahn ab.

Der Transport von solchen Transporteinrichtungen auf einer Horizontalfördereinrichtung bedingt insbesondere in der Fertigung, dass die zu transportierenden Werkstücke in bestimmten zeitlichen Abständen einem bestimmten Arbeitsplatz zugeführt werden. Stehen insofern beispielsweise auf einer Horizontalförderbahn mehrere derartige Transporteinrichtungen hintereinander vor einem Arbeitsplatz an, so muss durch einen Vereinzelungsmechanismus sichergestellt werden, dass von diesen mehreren auf der Horizontalförderbahn befindlichen Transporteinrichtungen diese immer vereinzelt und zeitlich getaktet dem entsprechenden Arbeitsplatz zugeführt werden. Hierfür sind an der Horizontalförderbahn sogenannte Klinken vorgesehen, die in die Horizontalförderbahn eingefahren werden, um insofern als Stopper für die Transporteinrichtungen dienen.

Eine solche Horizontalförderbahn zeigt allerdings nicht nur solche Stopper auf, sondern besitzt auch Weichen zum Ein- und Ausschleusen der Transporteinrichtungen. Egal ob eine solche Transporteinrichtung nunmehr auf eine Horizontalförderbahn ein- oder ausgeschleust wird, oder durch einen als Stopper ausgebildeten Finger an einer bestimmten Stelle auf der Horizontalförderbahn angehalten wird, so ist in jedem Fall immer erforderlich, dass die Transporteinrichtung detektiert wird. Hierfür sind Sensoren und Impulsgeber bekannt, wobei der Impulsgeber beispielsweise in der Transporteinrichtung angeordnet ist und ein Signal an den Sensor übermittelt, wobei der Sensor mit der Steuerung für die Horizontalförderbahn in Verbindung steht, und nach Erhalt des Signales beispielsweise dafür sorgt, dass die Transporteinrichtung auf der Horizontalförderbahn angehalten wird.

Derartige Sensoren befinden sich auf der Horizontalförderbahn, und hier insbesondere im Seitenbereich der Kufen, wobei korrespondierend hierzu die Transporteinrichtung, wie bereits ausgeführt, den Impulsgeber aufnimmt, der bei Passieren des Sensors ein entsprechendes Signal an den Sensor übermittelt.

Problematisch an der bekannten Anordnung der Sensoren auf der Kufe ist, dass diese unter Umständen Schmutzeinwirkungen ausgesetzt sind, wie beispielsweise Öl, Staub und Ähnlichem, was die Funktionsweise derartiger Sensoren beeinträchtigen kann. Auch lässt sich eine Horizontalförderbahn im Bereich eines solchen Sensors nur mit relativ großem Aufwand sauber halten, da um den Sensor herum die Horizontalförderbahn und hier insbesondere die Kufe gesäubert werden muss, insbesondere wenn derartige Horizontalfördereinrichtungen in der Lebensmittelindustrie oder ganz allgemein Fertigungsanlagen mit erhöhter Sauberkeitsanforderung eingesetzt werden. Auch besteht die Gefahr, dass derartige Sensoren, da sie sich auf der Kufe befinden, aufgrund von Unachtsamkeit abgerissen werden.

In diesem Zusammenhang ist aus der FR 2 776 641 A1 eine Horizontaifördereinrichtung nach dem Oberbegriff des Anspruchs 1 bekannt, wobei in der Horizontalförderbahn der Horizontalfördereinrichtung eine Halterung für einen Sensor vorgesehen ist, wobei der Sensor über die Halterung übersteht, und mit einem Impulsgeber einer Transporteinrichtung in unmittelbaren Kontakt bringbar ist, vor dem Hintergrund der Steuerung der Transporteinrichtung.

Die der Erfindung zugrunde liegende Aufgabe besteht demzufolge darin, hier Abhilfe zu schaffen. Insbesondere soll durch eine geänderte Konstruktion sichergestellt sein, dass der Sensor nicht mehr verschmutzen kann, und dass darüber hinaus auch nicht die Gefahr besteht, dass der Sensor aufgrund von Unachtsamkeit, beispielsweise des Bedienpersonals von der Kufe abgerissen wird. Auch soll das Sauberhalten der Oberseite der Horizontalförderbahn erleichtert werden.

Zur Lösung der Aufgabe wird erfindungsgemäß vorgeschlagen, dass der Sensor an der Unterseite der Horizontalförderbahn angeordnet ist, wobei die Oberfläche der Horizontalförderbahn nicht durchbrochen ist und der Impulsgeber in einer Kammer in der Transporteinrichtung lagert. Hieraus wird deutlich, dass über die Kufen nichts mehr übersteht, mithin die Sauberhaltung der Horizontalförderbahn unproblematisch ist. Das heißt aber auch, dass die Oberfläche der Kufe nicht durchbrochen ist; somit bleibt der Sensor einstellbar in Bezug auf beispielsweise den Abstand zu dem Impulsgeber.

Nach dem Stand der Technik ist es so, dass die Sensoren auf der Oberseite der Kufe moniert sind. Hieraus wird deutlich, dass die Kufe eine Breite aufweisen muss, die mindestens der seitlichen Erstreckung des Sensors auf der Kufe, zuzüglich der Überdeckung der Kufe durch die Transporteinrichtung entsprechen muss. Bei auf der Unterseite der Kufe montierten Sensor kann die Kufe um das Maß der Erstreckung des Sensors über die Kufe in der Breite vermindert werden.

Weitere Merkmale und Ausgestaltungen der Erfindung ergeben sich aus den Unteransprüchen.
Nach einem besonders vorteilhaften Merkmal ist in diesem Zusammenhang vorgesehen, dass der Sensor für die Steuerung als Magnetschalter ausgebildet ist, und der Impulsgeber als Magnet. Um einen solchen Magnetschalter als Sensor für die Steuerung verwenden zu können, ist insbesondere vorgesehen, dass zumindest die Kufe der Horizontalförderbahn, unter der sich der Magnetschalter als Sensor befindet, aus einem nicht magnetisierbaren Material, z. B. einem Nichteisenmetall ausgebildet ist.

Korrespondierend hierzu ist des Weiteren vorteilhaft vorgesehen, dass die Kammer zur Aufnahme des Magneten, um der Einwirkung von Verschmutzungen entgegenzuwirken, verschließbar ist. Hierzu ist eine Verschlussplatte vorgesehen, die ebenfalls aus nicht magnetisierbarem Material, z. B. einem Nichteisenmetall ausgebildet ist. Um weiterhin Störungen des durch den Magneten als Impulsgeber abgegebenen Magnetfeldes zu vermeiden, ist die Transporteinrichtung, insbesondere ein Werkstückträger, aus Kunststoff ausgebildet und demzufolge aus nicht magnetisierbarem Material.

Vorteilhaft ist die Kufe im Querschnitt U-förmig ausgebildet, wobei der Sensor im Bereich des Steges der U-förmig ausgebildeten Kufe an deren Unterseite angeordnet ist.

Nach einem weiteren Merkmal der Erfindung ist vorgesehen, dass die Transporteinrichtung einen Transportkörper aufweist, wobei an der Unterseite Führungsmittel zur Führung der Transporteinrichtung in der Führungsspur vorgesehen sind. Der Transportkörper, der auf der Unterseite Führungsmittel, beispielsweise in Form mindestens eines Fußes, zur Führung der Transporteinrichtung in der Führungsspur aufweist, erstreckt sich seitlich über zumindest einen Teil der Breite der beiden Kufen. Hieraus wird deutlich, dass sich der Transportkörper als Teil der Transporteinrichtung auf diesen Kufen seitlich abstützt, während er sich mit dem mindestens einen Fuß auf der Endlosfördereinrichtung abstützt, und durch die Endlosfördereinrichtung über diesen mindestens einen Fuß durch Reibschluss mitgenommen wird. Der Bereich des Transportkörpers, der sich über der Kufe befindet, weist die Kammer zur Aufnahme des Magneten auf, wobei der Sensor, beispielsweise der Magnetschalter an einer Stelle auf der Unterseite der Kufe angeordnet wird, wo er sich unmittelbar unter dem Magneten befindet, wenn die Transporteinrichtung auf der Horizontalförderbahn entlang verfahren wird.

Der Transportkörper der Transporteinrichtung besitzt nach einem weiteren Merkmal der Erfindung auf der Oberseite Mittel zur Fixierung eines Werkstückes, beispielsweise in Form von Stiften. Das bedeutet, dass beispielsweise durch einen Roboterarm das Werkstück problemlos nach oben abgehoben werden kann.

Es wurde bereits darauf hingewiesen, dass in der Führungsspur die Endlosfördereinrichtung verläuft. Die Endlosfördereinrichtung ist hierbei als Förderband ausgebildet, wobei ein solches Förderband einzelne gelenkig miteinander verbundene Segmente aufweist, sodass ein solches Förderband auch um Kurven geführt werden kann.

Anhand der Zeichnungen wird die Erfindung nachstehend beispielhaft näher erläutert.

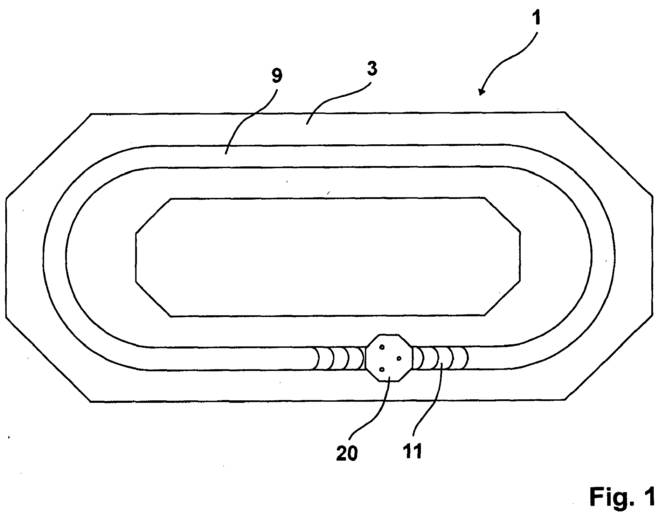

- Fig. 1: zeigt schematisch eine Horizontalfördereinrichtung;
- Fig. 2: zeigt einen Ausschnitt aus der Horizontalfördereinrichtung gemäß Fig. 1;
- Fig. 3: zeigt einen Schnitt gemäß der Linie III-III aus Fig. 2.

Die insgesamt mit 1 bezeichnete Horizontalfördereinrichtung umfasst die Horizontalförderbahn 3, wobei auf der Horizontalförderbahn 3 lediglich eine Transporteinrichtung 20 dargestellt ist.

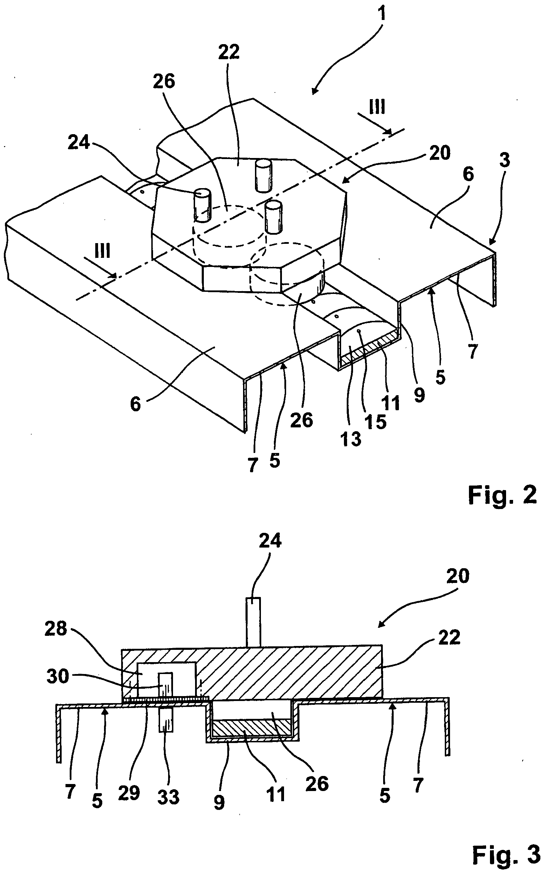

Die Ausgestaltung der Horizontalfördereinrichtung 1 ergibt sich im Wesentlichen in Anschauung von Fig. 2. Die Horizontalförderbahn 3 umfasst zwei parallel zueinander verlaufende Kufen 5, wobei die Kufen 5 durch eine Führungsspur 9 miteinander in Verbindung stehen. Die Führungsspur 9 ist nach unten hin von der Oberseite 6 der Kufe 5 abgesetzt, sodass die Horizontalförderbahn 3 bildende Profil mäanderartig ausgebildet ist. In der Führungsspur 9 befindet sich das umlaufende Förderband 11, wobei das Förderband 11 einzelne Segmente 13 zeigt, die durch Gelenke 15 miteinander in Verbindung stehen. Auf der Horizontalförderbahn 3 befindet sich die mit 20 bezeichnete Transporteinrichtung, die im vorliegenden Fall, z. B. als Werkstückträger ausgebildet ist. Die Transporteinrichtung 20 umfasst den Transportkörper 22, der auf seiner Oberseite Stifte 24 als Mittel zur Fixierung eines Werkstückes aufweist. Auf seiner Unterseite zeigt der Transportkörper 22 zwei hintereinander angeordnete Füße 26. Mit den Füßen 26 steht die Transporteinrichtung 20 auf dem Förderband 11 auf. Bei Bewegung des Förderbandes 11 wird die Transporteinrichtung 20, also beispielsweise ein Werkstückträger, durch Reibschluss mitgenommen. Wird die Transporteinrichtung angehalten, dann gleitet das Förderband 11 unter der Transporteinrichtung 20 hindurch.

Der Gegenstand der Erfindung ergibt sich nun in Anschauung von Fig. 3. Aus Fig. 3 ist eine in dem Transportkörper 22 angeordnete Kammer 28 erkennbar, die den Magneten 30 als Impulsgeber für den Magnetschalter 33 als Sensor aufnimmt. Die Kammer 28 ist durch die Verschlussplatte 29 verschließbar, sodass der Magnet vor Umwelteinflüssen und hier insbesondere Verschmutzung geschützt ist. Denkbar ist allerdings auch den Magneten als Impulsgeber in dem Kunststoff des Transportkörpers einzulassen. Der mit 33 bezeichnete Magnetschalter, der sich auf der Unterseite am Steg 7 der im Querschnitt U-förmigen Kufe 5 befindet, wie sich dies in Anschauung von Fig. 3 ergibt, ist ebenfalls geschützt, und zwar eben dadurch, dass er sich in dem im Wesentlichen rechteckigen, U-förmigen Gehäuse, das die Kufe 5 bildet, befindet. Wesentlich hierbei ist, dass der Magnet und der Magnetschalter sich in einer Ebene befinden, im vorliegenden Fall genau fluchtend übereinander. Dies deshalb, damit der Magnet ein möglichst starkes Signal für den Magnetschalter generieren kann. Insofern ist auch vorgesehen, wie dies bereits an anderer Stelle erläutert worden ist, dass sich im Bereich des Magnetschalters und auch des Magneten keinerlei magnetisierbare Materialien befinden. In diesem Zusammenhang ist vorgesehen, dass der Transportkörper 22 aus Kunststoff besteht, wobei zumindest die Kufe 5, unter der sich der Magnetschalter befindet, ebenfalls aus einem nicht magnetisierbaren Material, insbesondere einem Nichteisenmetall, z. B. Aluminium hergestellt ist.

### Bezugszeichenliste:

- 1: Horizontalfördereinrichtung
- 3: Horizontalförderbahn
- 5: Kufe
- 6: Oberseite der Kufe
- 7: Steg der Kufe
- 9: Führungsspur
- 11: Förderband
- 13: Segment des Förderbands
- 15: Gelenk für Segment des Förderbands
- 20: Transporteinrichtung (Werkstückträger)
- 22: Transportkörper der Transporteinrichtung
- 24: Stift auf Transportkörper
- 26: Füße unter dem Transportkörper
- 28: Kammer für Magnet im Transportkörper
- 29: Verschlussplatte für Kammer
- 30: Magnet (Impulsgeber)
- 33: Magnetschalter (Sensor)

## Patentansprüche

1. Horizontalfördereinrichtung (1) umfassend eine Horizontalförderbahn (3) mit einer Endlosfördereinrichtung sowie mindestens einer auf der Horizontalförderbahn (3) angeordneten Transporteinrichtung (20), die durch die Endlosfördereinrichtung mitnehmbar ist, wobei die Endlosfördereinrichtung einen Antrieb aufweist, wobei der Antrieb mit einer Steuerung in Verbindung steht, wobei die Horizontalförderbahn (3) einen Sensor (33) für die Steuerung aufweist, wobei die Transporteinrichtung (20) einen Impulsgeber (30) aufweist, der mit dem Sensor (33) zusammenarbeitet,
**dadurch gekennzeichnet,**
**dass** der Sensor an der Unterseite der Horizontalförderbahn (3) angeordnet ist, wobei die Oberfläche der Horizontalförderbahn (3) nicht durchbrochen ist und der Impulsgeber (30) in einer Kammer (28) in der Transporteinrichtung (20) lagert.

2. Horizontalfördereinrichtung nach Anspruch 1,
**dadurch gekennzeichnet,**
**dass** die Horizontalförderbahn (3) ein im Querschnitt mäanderförmiges Profil aufweist, umfassend zwei im gleichen Abstand zueinander verlaufende Kufen (5), die durch eine nach unten abgesetzte Führungsspur (9) miteinander verbunden sind.

3. Horizontalfördereinrichtung nach Anspruch 2,
**dadurch gekennzeichnet,**
**dass** in der Führungsspur (9) die Endlosfördereinrichtung verläuft.

4. Horizontalfördereinrichtung nach einem der voranstehenden Ansprüche,
**dadurch gekennzeichnet,**
**dass** die Endlosfördereinrichtung als Förderband (11) ausgebildet ist.

5. Horizontalfördereinrichtung nach Anspruch 4,
**dadurch gekennzeichnet,**
**dass** das Förderband (3) aus einzelnen gelenkig miteinander verbundenen Segmenten (15) ausgebildet ist.

6. Horizontalfördereinrichtung nach einem der voranstehenden Ansprüche,
**dadurch gekennzeichnet,**
**dass** der Sensor für die Steuerung als Magnetschalter (33) ausgebildet ist, wobei der Impulsgeber einen Magneten (30) aufweist.

7. Horizontalfördereinrichtung nach einem der Ansprüche 2 bis 6,
**dadurch gekennzeichnet,**
**dass** die Kufen (5) im Querschnitt U-förmig ausgebildet sind, wobei der Sensor im Bereich des Steges (7) der im Querschnitt U-förmig ausgebildeten Kufe (5) angeordnet ist.

8. Horizontalfördereinrichtung nach einem der Ansprüche 2 bis 7,
**dadurch gekennzeichnet,**
**dass** zumindest die Kufe (5), die den Sensor auf der Unterseite aufweist, aus einem nicht magnetisierbaren Material, z. B. Nichteisenmetall ausgebildet ist.

9. Horizontalfördereinrichtung nach einem der voranstehenden Ansprüche,
**dadurch gekennzeichnet,**
**dass** die Kammer (28) zur Aufnahme des Impulsgebers verschließbar ist.

10. Horizontalfördereinrichtung nach Anspruch 9,
**dadurch gekennzeichnet,**
**dass** die Kammer (28) eine Verschlussplatte (29) aus nicht magnetisierbarem Material, z. B. einem Nichteisenmetall aufweist.

11. Horizontalfördereinrichtung nach einem der voranstehenden Ansprüche,
**dadurch gekennzeichnet,**
**dass** die Transporteinrichtung (20) einen Transportkörper (22) aufweist, wobei auf der Oberseite des Transportkörpers Mittel zur Fixierung eines Werkstücks angeordnet sind.

12. Horizontalfördereinrichtung nach einem der Ansprüche 2 bis 11,
**dadurch gekennzeichnet,**
**dass** die Transporteinrichtung (20) einen Transportkörper (22) aufweist, wobei an der Unterseite des Transportkörpers (22) Führungsmittel zur Führung der Transporteinrichtung (20) in der Führungsspur (9) angeordnet sind.

13. Horizontalfördereinrichtung nach Anspruch 12,
**dadurch gekennzeichnet,**
**dass** das Führungsmittel als Fuß (26) ausgebildet ist.

14. Horizontalfördereinrichtung nach Anspruch 12,
**dadurch gekennzeichnet,**
**dass** an der Unterseite des Transportkörpers (22) als Führungsmittel zwei hintereinander angeordnete, Füße (26) angeordnet sind.

15. Horizontalfördereinrichtung nach einem der Ansprüche 12 bis 14,
**dadurch gekennzeichnet,**
**dass** der Transportkörper (20) mit den Führungsmitteln auf der Endlosfördereinrichtung aufsteht, und sich seitlich über zumindest einen Teil der Breite der beiden Kufen (5) erstreckt.

## Claims

1. A horizontal conveyor apparatus (1) comprising a horizontal conveyor track (3) with an endless conveyor apparatus as well as at least one transport device (20), which is disposed on the horizontal conveyor track (3) and which can be carried along by the endless conveyor apparatus, wherein the endless conveyor apparatus has a drive, wherein the drive is connected to a controller, wherein the horizontal conveyor track (3) has a sensor (33) for the controller, wherein the transport device (20) has an impulse generator (30), which cooperates with the sensor (33),
**characterized in that**
the sensor is disposed on the bottom side of the horizontal conveyor track (3), wherein the surface of the horizontal conveyor track (3) is not pierced and the impulse generator (30) is mounted in a chamber (28) in the transport device (20).

2. The horizontal conveyor apparatus according to claim 1,
**characterized in that**
the horizontal conveyor track (3) has a cross-sectionally meandering profile, comprising two skids (5), which run at an equal distance from each other and which are connected with each other by a downward stepped guiding track (9).

3. The horizontal conveyor apparatus according to claim 2,
**characterized in that**
the endless conveyor apparatus runs in the guiding track (9).

4. The horizontal conveyor apparatus according to one of the aforementioned claims,
**characterized in that**
the endless conveyor apparatus is designed as a conveyor belt (11).

5. The horizontal conveyor apparatus according to claim 4,
**characterized in that**
the conveyor belt (3) is formed by individual segments (15) articulately connected to each other.

6. The horizontal conveyor apparatus according to one of the aforementioned claims,
**characterized in that**
the sensor for the controller is designed as a magnetic switch (33), wherein the impulse generator comprises a magnet (30).

7. The horizontal conveyor apparatus according to one of the claims 2 to 6,
**characterized in that**
the skids (5) have a U-shaped cross-section, wherein the sensor is disposed in the area of the cross-beam (7) of the cross-sectionally U-shaped skid (5).

8. The horizontal conveyor apparatus according to one of the claims 2 to 7,
**characterized in that**
at least the skid (5), which has the sensor on its bottom side, is made of a non-magnetisable material, e.g. a non-ferrous metal.

9. The horizontal conveyor apparatus according to one of the aforementioned claims,
**characterized in that**
the chamber (28) for receiving the impulse generator is closable.

10. The horizontal conveyor apparatus according to claim 9,
**characterized in that**
the chamber (28) comprises a closing plate (29) made of a non-magnetisable material, e.g. a non-ferrous material.

11. The horizontal conveyor apparatus according to one of the aforementioned claims,
**characterized in that**
the transport device (20) has a transport body (22), wherein means for fastening a workpiece are disposed on the upper side of the transport body.

12. The horizontal conveyor apparatus according to one of the claims 2 to 11,
**characterized in that**
the transport device (20) has a transport body (22), wherein guiding means for guiding the transport device (20) in the guiding track (9) are disposed on the bottom side of the transport body (22).

13. The horizontal conveyor apparatus according to claim 12,
**characterized in that**
the guiding means is designed as a base (26).

14. The horizontal conveyor apparatus according to claim 12,
**characterized in that**
two successively arranged bases (26) are disposed as guiding means on the bottom side of the transport body (22).

15. The horizontal conveyor apparatus according to one of the claims 12 to 14,
**characterized in that**
the transport body (20) stands with the guiding means on the endless conveyor apparatus and extends laterally across at least a part of the width of the two skids (5).

## Revendications

1. Dispositif de convoyage horizontal (1) comportant une piste de transport horizontale (3) avec un dispositif de convoyage sans fin et au moins un dispositif de transport (20) disposé sur la piste de transport horizontale (3) qui peut être entraîné par le dispositif de convoyage sans fin, où le dispositif de convoyage sans fin comprend un entraînement, où l'entraînement est connecté avec une commande, où la piste de transport horizontale (3) comprend un capteur (33) pour la commande, où le dispositif de transport (20) comprend un générateur d'impulsions (30) qui coopère avec le capteur (33),
**caractérisé en ce que**
le capteur est disposé sur le côté inférieur de la piste de transport horizontale (3), où la surface de la piste de transport horizontale (3) n'est pas ajourée et le générateur d'impulsions (30) est installé dans un compartiment (28) dans le dispositif de transport (20).

2. Dispositif de convoyage horizontal selon la revendication 1,
**caractérisé en ce que**
la piste de transport horizontale (3) a un profil de section transversale en forme de méandre, comprenant deux patins (5) s'étendant à distance égale l'un de l'autre et reliés par une rainure de guidage (9) étagée vers le bas.

3. Dispositif de convoyage horizontal selon la revendication 2,
**caractérisé en ce que**
le dispositif de convoyage sans fin s'étend dans la rainure de guidage (9).

4. Dispositif de convoyage horizontal selon l'une quelconque des revendications précédentes,
**caractérisé en ce que**
le dispositif de convoyage sans fin est conçu comme une bande transporteuse (11).

5. Dispositif de convoyage horizontal selon la revendication 4,
**caractérisé en ce que**
la bande transporteuse (3) est constituée de segments (15) individuels connectés l'un à l'autre de manière articulée.

6. Dispositif de convoyage horizontal selon l'une quelconque des revendications précédentes,
**caractérisé en ce que**
le capteur pour la commande est conçu comme un interrupteur magnétique (33), où le générateur d'impulsions comporte un aimant (30).

7. Dispositif de convoyage horizontal selon l'une quelconque des revendications 2 à 6,
**caractérisé en ce que**
les patins (5) ont une section transversale en forme de U, où le capteur est disposé dans la région de la traverse (7) du patin (5) à section transversale en forme de U.

8. Dispositif de convoyage horizontal selon l'une des revendications 2 à 7,
**caractérisé en ce qu'**
au moins le patin (5) comportant le capteur sur son côté inférieur est formé dans un matériau non magnétisable, par exemple un métal non ferreux.

9. Dispositif de convoyage horizontal selon l'une quelconque des revendications précédentes,
**caractérisé en ce que**
le compartiment (28) destiné à recevoir le générateur d'impulsions peut être fermé.

10. Dispositif de convoyage horizontal selon la revendication 9,
**caractérisé en ce que**
le compartiment (28) comprend une plaque de fermeture (29) en un matériau non magnétisable, par exemple un métal non ferreux.

11. Dispositif de convoyage horizontal selon l'une quelconque des revendications précédentes,
**caractérisé en ce que**
le dispositif de transport (20) comprend un organe de transport (22), où des moyens de fixation d'une pièce sont disposés sur le côté supérieur de l'organe de transport.

12. Dispositif de convoyage horizontal selon l'une des revendications 2 à 11,
**caractérisé en ce que**
le dispositif de transport (20) comprend un organe de transport (22), où des moyens de guidage sont disposés sur le côté inférieur de
l'organe de transport (22) pour guider le dispositif de transport (20) dans la rainure de guidage (9).

13. Dispositif de convoyage horizontal selon la revendication 12,
**caractérisé en ce que**
le moyen de guidage est conçu comme un pied (26).

14. Dispositif de convoyage horizontal selon la revendication 12,
**caractérisé en ce que**
deux pieds (26) disposés l'un derrière l'autre sont disposés, en tant que moyens de guidage, sur le côté inférieur de l'organe de transport (22).

15. Dispositif de convoyage horizontal selon l'une des revendications 12 à 14,
**caractérisé en ce que**
l'organe de transport (20) repose avec les moyens de guidage sur le dispositif de convoyage sans fin, et s'étend latéralement sur au moins une partie de la largeur des deux patins (5).
